# FASCICULE DE BREVET EUROPEEN

(11) **EP 4 404 738 B1**
(45) Date de publication et mention de la délivrance du brevet: **13.08.2025**
(21) Numéro de dépôt: 22777635.8
(22) Date de dépôt: 20.09.2022
(51) Int. Cl.: A01K 1/12

(54) **INSTALLATION D'ÉLEVAGE COMPORTANT UNE LICE ROTATIVE ET UN SYSTÈME D'ENTRAÎNEMENT ET DE BLOCAGE DE LA LICE**
TIERHALTUNGSANLAGE MIT EINEM DREHBAREN TOR UND EINEM TORANTRIEB UND -VERRIEGELUNGSSYSTEM
LIVESTOCK FACILITY WITH A ROTATING EXIT REEL AND AN EXIT REEL DRIVE AND LOCKING SYSTEM

(30) Priorité: 22.09.2021 FR 2109943
(43) Date de publication de la demande: 31.07.2024
(73) Titulaire: Etablissements Binet, 50160 Torigny-les-Villes (FR)
(72) Inventeur: BARBIER, Matthieu, 50160 TORIGNY-LES-VILLES (FR); BEAUSIRE, Fabrice, 50160 TORIGNY-LES-VILLES (FR)
(74) Mandataire: Cabinet Le Guen Maillet
(86) Numéro de dépôt international: PCT/EP2022/076037
(87) Numéro de publication internationale: WO 2023/046657

(56) Documents cités:
- EP-A1- 0 549 324
- US-A- 4 977 856
- AGROMAX: "BouMatic Xpressway Parallel", 10 March 2014 (2014-03-10), XP055919053, Retrieved from the Internet <URL:https://www.youtube.com/watch?v=FXYowR9k-j0&t=243s> [retrieved on 20220509]

## Description

### DOMAINE TECHNIQUE

La présente invention concerne une installation d'élevage qui comporte une lice rotative et un système d'entraînement et de blocage de la lice.

### ÉTAT DE LA TECHNIQUE ANTÉRIEURE

Une installation d'élevage, comme par exemple une salle de traite, comporte des cases afin de placer les animaux. Chaque case comporte une barrière qui sert à bloquer l'animal en position pendant la traite et cette barrière s'escamote pour laisser passer l'animal lorsque la traite est terminée. Une telle barrière est également appelée « lice avant ». Une telle lice est montée rotative entre deux poteaux verticaux autour d'un axe de rotation horizontal.

La lice passe successivement d'une première position de blocage dans laquelle la lice s'étend verticalement pour bloquer les animaux, à une position de libération dans laquelle la lice s'étend horizontalement pour laisser passer les animaux, à une deuxième position de blocage dans laquelle la lice s'étend verticalement pour bloquer les animaux, et le cycle continue avec une nouvelle position de libération.

Entre deux positions successives, la lice fait un quart de tour et elle tourne toujours dans le même sens pour passer par les différentes positions.

L'entraînement en rotation de la lice est assuré par un système d'entraînement, mais bien que les systèmes d'entraînement actuellement utilisés donnent satisfaction, il est souhaitable de trouver un système d'entraînement plus performant assurant entre autres un meilleur indexage des différentes positions.

Les documents EP-A-0 549 324, US-A-4,977,856 et Agromax : « BouMatic Xpressway parallel » divulguent des installations d'élevage de l'état de la technique.

### EXPOSÉ DE L'INVENTION

Un objet de la présente invention est de proposer une installation d'élevage qui comporte une lice avant rotative et un système d'entraînement et de blocage de la lice qui soit plus facile à mettre en œuvre et qui permet une meilleure maîtrise des positions d'arrêt de la lice.

À cet effet, est proposée une installation d'élevage comportant :
- deux poteaux,
- une lice montée rotative entre les deux poteaux autour d'un axe de rotation horizontal, entre successivement une première position de blocage dans laquelle la lice s'étend verticalement, une position de libération dans laquelle la lice s'étend horizontalement et une deuxième position de blocage dans laquelle la lice s'étend verticalement, où la lice comporte pour chaque poteau, une barre montée mobile en rotation autour de l'axe de rotation sur le poteau,
- un système d'entraînement et de blocage arrangé sur un des poteaux pour entraîner la lice en rotation autour de l'axe de rotation, où le système comporte :
   - une première roue fixée de manière coaxiale à la barre correspondant audit poteau,
   - une deuxième roue montée libre en rotation sur ledit poteau et dont l'axe de rotation est parallèle à l'axe de rotation de la lice,
   - un lien souple formant une boucle entre les deux roues,
   l'installation d'élevage étant caractérisée en ce qu'elle comporte en outre :
   - un système de serrage avec deux mâchoires mobiles horizontalement l'une par rapport à l'autre entre une position serrée dans laquelle le lien souple est serré entre les deux mâchoires et une position desserrée dans laquelle le lien souple n'est pas serré entre les deux mâchoires,
   - un premier système d'actionnement qui actionne les mâchoires pour les faire passer alternativement de la position serrée à la position desserrée,
   - un deuxième système d'actionnement auquel est fixé le système de serrage et qui est arrangé pour déplacer le système de serrage entre les deux roues, et
   - une unité de contrôle qui commande le premier système d'actionnement et le deuxième système d'actionnement.

Avec un tel système d'entraînement et de blocage, les positions d'arrêt de la lice sont mieux maîtrisées.

Selon un mode de réalisation particulier, le deuxième système d'actionnement comprend un vérin d'actionnement dont le cylindre ou la tige est fixé au poteau central et dont la tige ou le cylindre est fixé au système de serrage.

Selon un autre mode de réalisation particulier, le deuxième système d'actionnement comprend deux vérins d'actionnement montés dans le prolongement l'un de l'autre avec une tige commune, où le cylindre du premier vérin d'actionnement est fixé au système de serrage et où le cylindre du deuxième vérin d'actionnement est fixé au poteau.

Avantageusement, le système comporte au moins un rail de guidage, le ou chaque rail de guidage est fixé au poteau et le système de serrage est monté coulissant le long du ou de chaque rail de guidage.

Avantageusement, le système de serrage comporte une première mâchoire fixe et une deuxième mâchoire mobile horizontalement par rapport à la première mâchoire, et la première mâchoire est guidée le long du ou de chaque rail de guidage.

Avantageusement, le lien souple comporte des alvéoles, la deuxième mâchoire comporte des dents et chaque dent s'insère dans une alvéole en position serrée.

Avantageusement, l'installation d'élevage comporte un système de verrouillage commandé par l'unité de contrôle et le système de verrouillage prend alternativement une position verrouillée dans laquelle le système de verrouillage bloque la lice dans une position de blocage et une position déverrouillée dans laquelle le système de verrouillage ne bloque pas la lice.

Avantageusement, le système de verrouillage comporte un support, un pêne solidaire de la lice, une gâche comportant une butée fixe solidaire du support et un loquet monté mobile en rotation sur le support, et un vérin de déverrouillage commandé par l'unité de contrôle dont le cylindre est solidaire du poteau central et dont la tige est solidaire du support, et sous l'action du vérin de déverrouillage, le support est mobile entre une première position correspondant à la position verrouillée dans laquelle le pêne est dans la gâche et une deuxième position correspondant à la position déverrouillée dans laquelle le pêne n'est pas dans la gâche.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue en perspective d'une installation d'élevage selon l'invention,
[Fig. 2] est une vue de côté d'un système de verrouillage utilisé dans l'installation d'élevage de la Fig. 1,
[Fig. 3] est une vue en coupe selon le plan vertical III de la Fig. 1 d'un système d'entraînement et de blocage selon l'invention,
[Fig. 4] est une vue en coupe selon la ligne IV-IV du système d'entraînement et de blocage de la Fig. 3, et
[Fig. 5] est une vue en coupe selon la ligne V-V du système d'entraînement et de blocage de la Fig. 4.

### EXPOSÉ DÉTAILLÉ DE MODES DE RÉALISATION

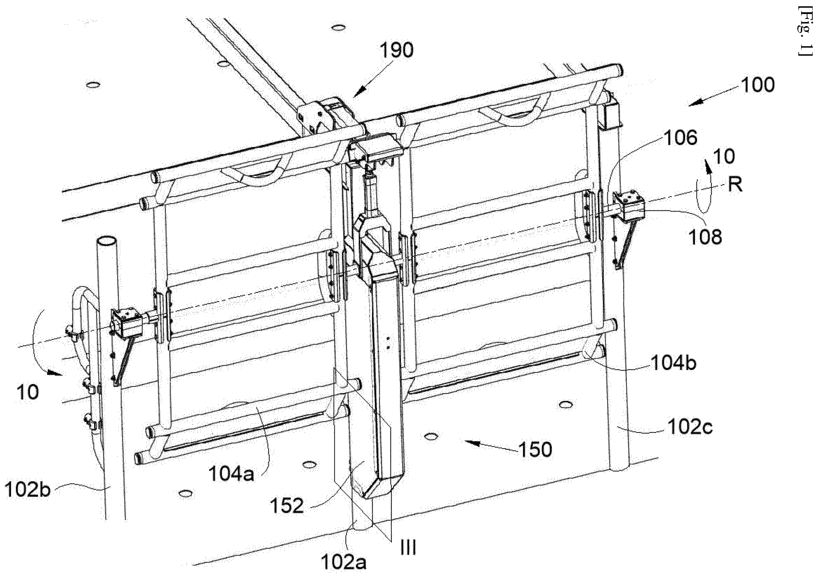

La Fig. 1 montre une installation d'élevage 100, comme par exemple une salle de traite pour animaux, en particulier des bovins.

L'installation 100 comporte ici trois poteaux 102a-c fixés au sol avec un poteau central 102a et deux poteaux latéraux 102b-c. Les trois poteaux 102a-c sont alignés et pour chaque paire de poteaux 102a-c voisins, l'installation comporte une lice avant 104a-b montée rotative entre les deux poteaux 102a-c de la paire autour d'un axe de rotation R horizontal et positionnée à l'avant de l'animal. À cette fin, pour chaque poteau 102a-c, la lice 104a-b comporte une barre 106 montée mobile en rotation autour de l'axe de rotation R sur le poteau 102a-c et qui est ici insérée dans un palier 108 solidaire dudit poteau 102a-c. Les barres 106 sont coaxiales avec l'axe de rotation R.

Chaque lice 104a-b est symétrique par rapport à l'axe de rotation R.

Les deux lices 104a-b voisines sont mises en rotation par un système d'entraînement et de blocage 150 (dénommé ci-dessous : système) qui entraîne les deux lices 104a-b en rotation autour de l'axe de rotation R dans le sens de la flèche 10. Pour des raisons de protection, le système 150 est logé dans un caisson 152 fixé au poteau central 102a.

Bien que dans le mode de réalisation de l'invention présenté ici, il y ait un système 150 pour deux lices 104a-b, ce système 150 peut être mis en œuvre pour une seule lice 104a-b. Il suffit donc d'avoir deux poteaux 102a-b, une lice 104a montée entre eux et le système 150 fixé sur l'un ou l'autre des poteaux 102a-b. Il est également possible de prévoir que le système 150 est mis en œuvre pour plusieurs lices consécutives où les barres 106 des différentes lices sont solidaires de proche en proche.

Comme pour l'état de la technique, chaque lice 104a-b est ainsi mobile en rotation.

La lice 104a-b passe successivement d'une première position de blocage dans laquelle la lice 104a-b s'étend verticalement pour bloquer les animaux, à une position de libération dans laquelle la lice 104a-b s'étend horizontalement pour laisser passer les animaux, à une deuxième position de blocage dans laquelle la lice 104a-b s'étend verticalement pour bloquer les animaux.

Entre deux positions successives, la lice 104a-b fait un quart de tour et elle tourne toujours dans le même sens 10 pour passer par les différentes positions.

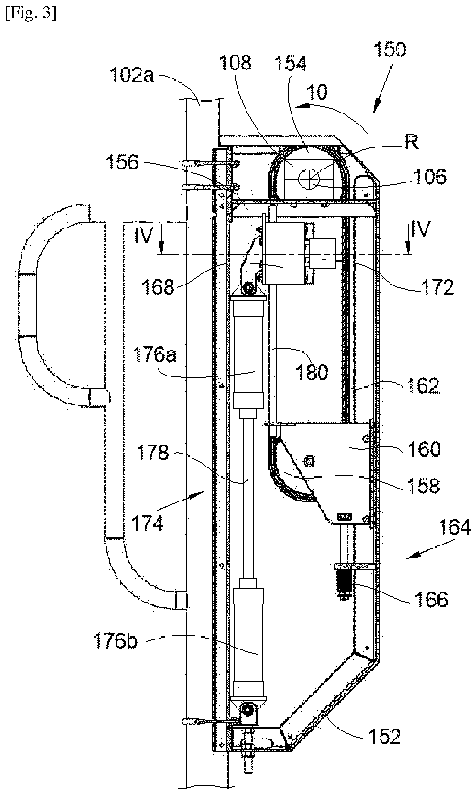

Les Figs. 3 à 5 montrent différentes vues du système 150.

Dans la description qui suit, on considère que le système 150 actionne une seule lice 104a. Pour actionner les deux lices 104a-b, il suffit alors de solidariser les barres 106 des deux lices 104a-b qui se trouvent au niveau du poteau central 102a ou au niveau des autres poteaux 102b-c.

Le système 150 comporte une première roue 154 fixée de manière coaxiale à la barre 106 qui est elle-même, ici, montée mobile en rotation dans un palier 108 solidaire du poteau central 102a ici par l'intermédiaire d'une première ferrure 156 fixée au poteau central 102a.

Le système 150 comporte une deuxième roue 158 montée libre en rotation sur le poteau central 102a, ici par l'intermédiaire d'une deuxième ferrure 160 fixée au caisson 152. L'axe de rotation de la deuxième roue 158 est parallèle à l'axe de rotation R.

Les deux roues 154 et 158 sont montées l'une au-dessus de l'autre, ici avec la deuxième roue 158 sous la première roue 154.

Un lien souple 162 forme une boucle entre les deux roues 154 et 158. Le lien souple 162 est par exemple une chaîne ou une courroie crantée par exemple. Selon le cas, chaque roue 154, 158 comporte des dents ou des crans pour coopérer avec le lien souple 162.

Dans le mode de réalisation de l'invention présenté ici, la deuxième ferrure 160 est fixée au caisson 152 par l'intermédiaire d'un système tendeur 164 permettant la mise en tension du lien souple 162 en écartant la deuxième roue 158 de la première roue 154. La deuxième ferrure 160 est montée mobile en translation verticalement par rapport au caisson 152 et un ressort 166 est contraint entre la deuxième ferrure 160 et le caisson 152.

Le système 150 comporte également un système de serrage 168 qui est disposé entre les deux roues 154 et 158 et qui comporte deux mâchoires 170a-b mobiles horizontalement l'une par rapport à l'autre entre une position serrée dans laquelle le lien souple 162 est serré entre les deux mâchoires 170a-b et une position desserrée dans laquelle le lien souple 162 n'est pas serré entre les deux mâchoires 170a-b. La partie du lien souple 162 qui est serrée est une partie verticale entre les deux roues 154 et 158.

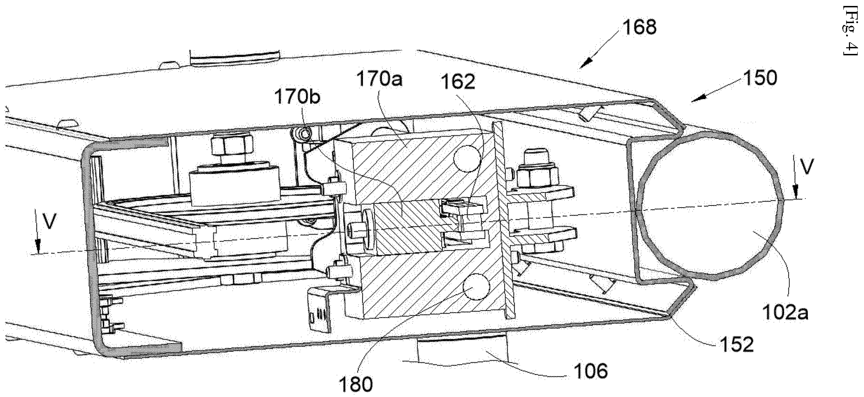

Le système 150 comporte également un premier système d'actionnement 172 (non représenté sur la Fig. 4), comme par exemple un vérin dit de serrage, qui actionne les mâchoires 170a-b pour les faire passer alternativement de la position serrée à la position desserrée.

Dans le mode de réalisation de l'invention présenté ici, une première mâchoire 170a est fixe horizontalement et une deuxième mâchoire 170b est mobile horizontalement par rapport à la première mâchoire 170a. Le premier système d'actionnement 172 est un vérin de serrage dont le cylindre est fixé horizontalement à la première mâchoire 170a et dont la tige est solidaire de la deuxième mâchoire 170b. Ainsi, le déplacement de la tige dans un sens ou dans l'autre permettra le passage en position serrée ou desserrée. Dans le mode de réalisation de l'invention présenté ici, la première mâchoire 170a prend la forme d'un U entre les branches duquel se déplace la deuxième mâchoire 170b et au fond duquel est disposé le lien souple 162.

Le système 150 comporte également un deuxième système d'actionnement 174 fixé entre le système de serrage 168 et le poteau central 102a, ici par l'intermédiaire du caisson 152 et il est prévu pour déplacer le système de serrage 168 entre les deux roues 154 et 158 en suivant le brin du lien souple 162 sur lequel le système de serrage 168 agit, et le déplacement est ici vertical.

Selon un premier mode de réalisation particulier et non représenté, le deuxième système d'actionnement 174 comprend un vérin d'actionnement où par exemple, le cylindre du vérin d'actionnement est fixé au poteau central 102a et où la tige du vérin d'actionnement est fixée au système de serrage 168. Bien sûr une installation inversée est possible et le cylindre du vérin d'actionnement est fixé au système de serrage 168 et la tige du vérin d'actionnement est fixée au poteau central 102a.

Le cylindre et la tige sont orientés globalement verticalement. Le vérin d'actionnement peut prendre une position rentrée dans laquelle une partie de la tige est rentrée dans le cylindre du vérin d'actionnement et une position sortie dans laquelle ladite partie de la tige est sortie du cylindre du vérin d'actionnement. Dans ce mode de réalisation, le vérin d'actionnement pourra être arrêté à mi-course, il pourra s'agir par exemple d'un vérin électrique ou pneumatique. Selon un mode de réalisation particulier, lorsque le vérin d'actionnement est en position sortie, le système de serrage 168 est dans une position haute correspondant à une position de blocage, lorsque le vérin d'actionnement est en position rentrée, le système de serrage 168 est dans une position basse correspondant à une autre position de blocage, et lorsque le vérin d'actionnement est en position mi-course, le système de serrage 168 est dans une position intermédiaire entre la position haute et la position basse correspondant à une position de libération.

Selon un deuxième mode de réalisation particulier, représenté sur les Figs. 3 à 5, le deuxième système d'actionnement 174 comprend deux vérins d'actionnement 176a-b montés dans le prolongement l'un de l'autre avec une tige commune 178. Le cylindre du premier vérin d'actionnement 176a est fixé au système de serrage 168 et le cylindre du deuxième vérin d'actionnement 176b est fixé au poteau central 102a. La tige commune 178 est montée entre les deux cylindres.

Dans le mode de réalisation de l'invention présenté ici, les deux cylindres et la tige commune 178 sont orientés verticalement avec le premier cylindre 176a au-dessus du deuxième vérin d'actionnement 176b.

Classiquement, chaque vérin d'actionnement 176a-b peut prendre une position rentrée dans laquelle une partie de la tige 178 est rentrée dans le cylindre du vérin d'actionnement 176a-b et une position sortie dans laquelle ladite partie de la tige 178 est sortie du cylindre du vérin d'actionnement 176a-b.

La longueur de la tige 178 est au moins égale à la somme des courses des deux vérins d'actionnement 176a-b.

Dans la configuration montrée sur les Figs. 3 à 5, lorsque les deux vérins d'actionnement 176a-b sont en position sortie (Fig. 3), le premier vérin d'actionnement 176a est le plus éloigné possible du deuxième vérin d'actionnement 176b et le système de serrage 168 est dans une position haute correspondant à une position de blocage, lorsque les vérins d'actionnement 176a-b sont en position rentrée, le premier vérin d'actionnement 176a est le plus proche possible du deuxième vérin d'actionnement 176b et le système de serrage 168 est dans une position basse correspondant à une autre position de blocage, et lorsque l'un des vérins d'actionnement 176a-b est en position rentrée et l'autre vérin d'actionnement 176b-a est en position sortie, le premier vérin d'actionnement 176a est dans une position intermédiaire entre la position la plus éloignée et la position la plus proche et le système de serrage 168 est dans une position intermédiaire entre la position haute et la position basse correspondant à la position de libération.

Le système 150 comporte également une unité de contrôle qui commande le premier système d'actionnement 172 et le deuxième système d'actionnement 174, c'est-à-dire chaque vérin d'actionnement 176a-b.

Le fonctionnement du système 150 est alors le suivant à partir de la première position de blocage de la lice 104a avec le ou chaque vérin d'actionnement 176a-b en position sortie (Fig. 3) et les mâchoires 170a-b en position serrée :
- l'unité de contrôle commande le deuxième système d'actionnement 174 pour déplacer le système de serrage 168 vers le bas et la lice 104a dans la première position de libération, dans le premier mode de réalisation, cela correspond à placer le vérin d'actionnement en position mi-course, et dans le deuxième mode de réalisation, cela correspond à actionner un des vérins d'actionnement 176a-b pour le faire passer en position rentrée,
- l'unité de contrôle commande le deuxième système d'actionnement 174 pour déplacer le système de serrage 168 vers le bas et la lice 104a dans la deuxième position de blocage, dans le premier mode de réalisation, cela correspond à placer le vérin d'actionnement en position rentrée et dans le deuxième mode de réalisation cela correspond à actionner l'autre des vérins d'actionnement 176a-b pour le faire passer en position rentrée,
- l'unité de contrôle commande le premier système d'actionnement 172 pour passer les mâchoires 170a-b en position desserrée,
- l'unité de contrôle commande le deuxième système d'actionnement 174 pour déplacer le système de serrage 168 vers le haut sans déplacer la lice 104a du fait que les mâchoires 170a-b sont en position desserrée, dans le premier mode de réalisation, cela correspond à placer le vérin d'actionnement en position mi-course, et dans le deuxième mode de réalisation, cela correspond à actionner l'un des vérins d'actionnement 176a-b pour le faire passer en position sortie,
- l'unité de contrôle commande le deuxième système d'actionnement 174 pour déplacer le système de serrage 168 vers le haut sans déplacer la lice 104a du fait que les mâchoires 170a-b sont en position desserrée, dans le premier mode de réalisation, cela correspond à placer le vérin d'actionnement en position sortie, et dans le deuxième mode de réalisation, cela correspond à actionner l'autre des vérins d'actionnement 176a-b pour le faire passer en position sortie, et
- l'unité de contrôle commande le premier système d'actionnement 172 pour passer les mâchoires 170a-b en position serrée, et le processus peut recommencer.

Dans le premier mode de réalisation, le vérin d'actionnement et la première roue 154 sont dimensionnés de manière à ce que l'actionnement d'un vérin d'actionnement sur une demicourse corresponde à un quart de tour de la première roue 154.

Dans le deuxième mode de réalisation, chaque vérin d'actionnement 176a-b et la première roue 154 sont dimensionnés de manière à ce que l'actionnement d'un vérin d'actionnement 176a-b corresponde à un quart de tour de la première roue 154.

Dans le deuxième mode de réalisation, le fait d'utiliser deux vérins d'actionnement 176a-b pour passer de la première position de blocage à la deuxième position de blocage permet d'avoir une position de libération qui est maintenue du fait que les vérins d'actionnement sont tous les deux en butée assurant ainsi un meilleur indexage des différentes positions. En outre, l'utilisation de deux vérins d'actionnement 176a-b permet de bénéficier des phénomènes d'accélération et de décélération progressives en début et en fin de course des vérins d'actionnement 176a-b.

Dans les deux modes de réalisation, le lien souple 162 reste toujours en prise entre deux positions de blocage ce qui garantit un contrôle permanent sur les 180° de rotation de la lice 104a-b entre deux positions de blocage.

Dans les deux modes de réalisation, le cycle du/des vérins d'actionnement 176a-b peut être différent si la position du vérin d'actionnement est inversée ou si le deuxième vérin d'actionnement 176b est au-dessus du premier vérin d'actionnement 176a, les vérins d'actionnement 176a-b s'allongeront successivement pour passer de la première position de blocage à la deuxième position de blocage.

De la même manière, selon la partie du lien souple 162 qui est serré, le cycle pourra être différent, par exemple selon que c'est la partie à gauche ou à droite sur la Fig. 3 qui est serrée. De la même manière, selon la position de la deuxième roue 158 par rapport à la première roue 154, le cycle pourra être différent, par exemple si la deuxième roue 158 est au-dessus de la première roue 154.

Ainsi, d'une manière générale, à partir d'une position serrée des mâchoires 170a-b, le fonctionnement du système 150 consiste, à partir de la première position de blocage de la lice 104a avec, pour le premier mode de réalisation, le vérin d'actionnement dans une première position (sortie ou rentrée), et pour le deuxième mode de réalisation, les deux vérins d'actionnement 176a-b dans une première position (sortie ou rentrée), pour l'unité de contrôle à commander :
- un actionnement du deuxième système d'actionnement 174 pour faire passer le vérin d'actionnement (premier mode de réalisation) en position mi-course, ou pour faire passer l'un des vérins d'actionnement 176a-b (deuxième mode de réalisation) dans une deuxième position (respectivement rentrée ou sortie), ce qui déplace le système de serrage 168 et la lice 104a dans la première position de libération,
- un actionnement du deuxième système d'actionnement 174 pour faire passer le vérin d'actionnement (premier mode de réalisation) dans une deuxième position (respectivement rentrée ou sortie), ou pour faire passer l'autre des vérins d'actionnement 176a-b (deuxième mode de réalisation) dans une deuxième position (respectivement rentrée ou sortie), ce qui déplace le système de serrage 168 et la lice 104a dans la deuxième position de blocage,
- un actionnement du premier système d'actionnement 172 pour passer les mâchoires 170a-b en position desserrée,
- un actionnement du deuxième système d'actionnement 174 pour faire passer le vérin d'actionnement (premier mode de réalisation) dans la position mi-course, ou pour faire passer l'un des vérins d'actionnement 176a-b (deuxième mode de réalisation) dans la première position (respectivement sortie ou rentrée), ce qui déplace le système de serrage 168 sans déplacer la lice 104a,
- un actionnement du deuxième système d'actionnement 174 pour faire passer le vérin d'actionnement (premier mode de réalisation) dans la première position (respectivement sortie ou rentrée), ou pour faire passer l'autre des vérins d'actionnement 176a-b (deuxième mode de réalisation) dans la première position (respectivement sortie ou rentrée), ce qui déplace le système de serrage 168 sans déplacer la lice 104a, et
- un actionnement du premier système d'actionnement 172 pour passer les mâchoires 170a-b en position serrée, et le processus peut recommencer.

Pour assurer le guidage du système de serrage 168 lors de son déplacement vertical, le système 150 comporte au moins un rail de guidage 180 qui sont ici au nombre de deux. Chaque rail de guidage 180 est fixé au poteau central 102a et s'étend parallèlement à la direction de translation du système de serrage 168. Le système de serrage 168 est monté coulissant le long de chaque rail de guidage 180, et plus particulièrement ici, c'est la première mâchoire 170a qui est fixe horizontalement qui est guidée le long de chaque rail de guidage 180.

Ici il y a un rail de guidage 180 de part et d'autre du lien souple 162. Chaque rail de guidage 180 est fixé ici entre la première ferrure 156 et la deuxième ferrure 160.

La force de serrage exercée au niveau du système de serrage 168 peut être réglée de manière à ce que, lorsqu'un animal empêche la rotation de la lice 104a-b ou tente de la faire tourner dans le sens inverse au sens de rotation prévu (10), le lien souple 162 glisse entre les mâchoires 170a-b, limitant ainsi les contraintes dans le/les vérins d'actionnement 176a-b du deuxième système d'actionnement 174 et évitant ainsi d'abîmer le système 150.

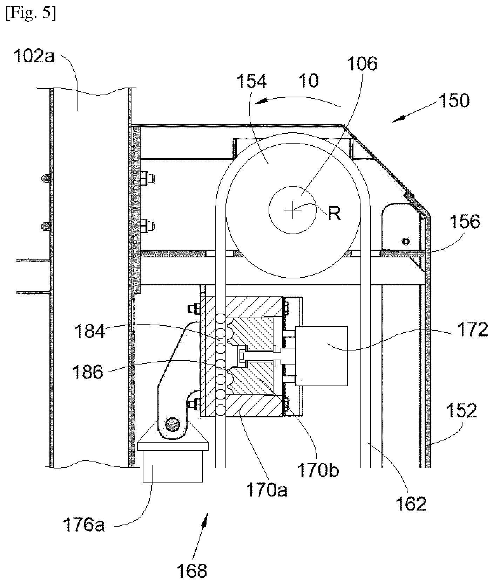

Selon un mode de réalisation particulier représenté à la Fig. 5, le lien souple 162 comporte des alvéoles 184 comme par exemple des crans d'une courroie crantée ou des orifices entre les maillons d'une chaîne et la deuxième mâchoire 170b comporte des dents 186 et chaque dent 186 s'insère dans une alvéole 184 en position serrée.

Un tel arrangement permet un meilleur accrochage du lien souple 162 par le système de serrage 168.

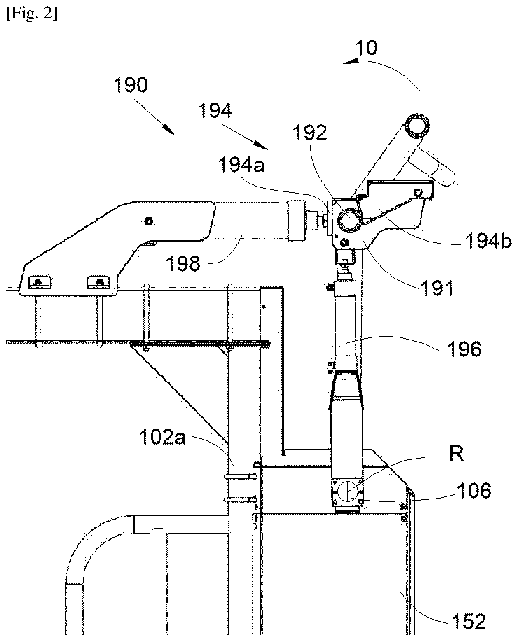

Pour assurer un meilleur blocage de la lice 104a-b en position de blocage, l'installation d'élevage 100 comporte un système de verrouillage 190 dont un mode de réalisation particulier est montré à la Fig. 2. Dans le mode de réalisation de l'invention présenté à la Fig. 1, il y a un système de verrouillage 190 fixé sur le poteau central 102a pour deux lices 104a-b. Bien que l'invention soit décrite avec un système de verrouillage 190 particulier, d'autres systèmes de verrouillage 190 sont envisageables pour l'homme du métier.

Le système de verrouillage 190 est commandé par l'unité de contrôle et prend alternativement une position verrouillée dans laquelle le système de verrouillage 190 bloque la lice 104a-b dans une position de blocage et une position déverrouillée dans laquelle le système de verrouillage 190 ne bloque pas la lice 104a-b afin de permettre la rotation de ladite lice 104a-b. Avant d'entamer le déplacement du vérin d'actionnement (premier mode de réalisation) pour le faire passer en position mi-course ou de l'un des vérins d'actionnement 176a-b (deuxième mode de réalisation) pour le faire passer dans une deuxième position, le système de verrouillage 190 est placé en position déverrouillée autorisant de fait le passage de la lice 104a dans la première position de libération, et avant d'entamer le déplacement du vérin d'actionnement (premier mode de réalisation) pour le faire passer en deuxième position ou de l'autre des vérins d'actionnement 176a-b (deuxième mode de réalisation) pour le faire passer dans une deuxième position, le système de verrouillage 190 est placé en position verrouillée et lorsque la lice 104a atteint la deuxième position de blocage, elle se verrouille avec le système de verrouillage 190.

Dans le mode de réalisation de l'invention présenté à la Fig. 2, le système de verrouillage 190 comporte un support 191, un pêne 192 solidaire de la lice 104a-b et qui prend ici la forme d'un téton horizontal, et une gâche 194 comportant une butée fixe 194a solidaire du support 191 et un loquet 194b monté mobile en rotation sur le support 191 autour d'un axe de verrouillage parallèle à l'axe de rotation R.

Le système de verrouillage 190 comporte également un vérin de déverrouillage 196 commandé par l'unité de contrôle dont le cylindre est solidaire du poteau central 102a, ici par l'intermédiaire de la barre 106 et dont la tige est solidaire du support 191. Comme cela est expliqué ci-dessous, le vérin de déverrouillage 196 est ici monté libre en rotation sur la barre 106 pour permettre une rotation de la lice 104a-b en position de blocage.

Sous l'action du vérin de déverrouillage 196, le support 191 est mobile entre une première position correspondant à la position verrouillée dans laquelle le pêne 192 est dans la gâche 194, c'est-à-dire entre la butée fixe 194a et le loquet 194b, et une deuxième position correspondant à la position déverrouillée dans laquelle le pêne 192 n'est pas dans la gâche 194.

Dans le mode de réalisation de l'invention présenté à la Fig. 2, le passage de la première position à la deuxième position consiste en un soulèvement du support 191 et donc également de la butée fixe 194a et du loquet 194b, et le passage de la deuxième position à la première position consiste en un abaissement du support 191 et donc également de la butée fixe 194a et du loquet 194b.

Dans le mode de réalisation de l'invention présenté ici, le déplacement du support 191 est une translation verticale.

Lorsque le support 191 est dans la deuxième position, le pêne 192 n'est plus bloqué par la gâche 194 et la lice 104a-b est alors libre de tourner autour de l'axe de rotation R dans le sens de rotation 10 prévu.

Ainsi, avant d'entamer le déplacement du ou de l'un des vérins d'actionnement 176a-b pour le faire passer dans une deuxième position, le support 191 est placé dans la deuxième position autorisant de fait le passage de la lice 104a dans la première position de libération.

Avant d'entamer le déplacement du ou de l'autre des vérins d'actionnement 176a-b pour le faire passer dans une deuxième position, le support 191 est placé dans la première position et lorsque la lice 104a atteint la deuxième position de blocage, le pêne 192 soulève le loquet 194b et vient en butée contre la butée fixe 194a. Le loquet 194b revient en position après le passage du pêne 192 sous l'effet de la pesanteur, bloquant de fait le pêne 192.

Dans le mode de réalisation de l'invention présenté à la Fig. 2, le système de verrouillage 190 comporte également un vérin de rotation 198 dont le cylindre est fixé au poteau central 102a et dont la tige est solidaire du support 191. Le déplacement de la tige du vérin de rotation 198 est ici une translation horizontale.

Le déplacement du support 191 en position de blocage de la lice 104a-b, déplace la lice 104a-b dans le sens inverse à la direction 10 et plaque la lice 104a-b contre les animaux.

## Revendications

1. Installation d'élevage (100) comportant :
- deux poteaux (102a-c),
- une lice (104a-b) montée rotative entre les deux poteaux (102a-c) autour d'un axe de rotation (R) horizontal, entre successivement une première position de blocage dans laquelle la lice (104a-b) s'étend verticalement, une position de libération dans laquelle la lice (104a-b) s'étend horizontalement et une deuxième position de blocage dans laquelle la lice (104a-b) s'étend verticalement, où la lice (104a-b) comporte pour chaque poteau (102a-c), une barre (106) montée mobile en rotation autour de l'axe de rotation (R) sur le poteau (102a-c),
- un système d'entraînement et de blocage (150) arrangé sur un des poteaux (102a) pour entraîner la lice (104a-b) en rotation autour de l'axe de rotation (R), où le système (150) comporte :
- une première roue (154) fixée de manière coaxiale à la barre (106) correspondant audit poteau (102a),
- une deuxième roue (158) montée libre en rotation sur ledit poteau (102a) et dont l'axe de rotation est parallèle à l'axe de rotation (R) de la lice (104a-b),
- un lien souple (162) formant une boucle entre les deux roues (154, 158),
l'installation d'élevage (100) étant **caractérisée en ce qu'**elle comporte en outre :
- un système de serrage (168) avec deux mâchoires (170a-b) mobiles horizontalement l'une par rapport à l'autre entre une position serrée dans laquelle le lien souple (162) est serré entre les deux mâchoires (170a-b) et une position desserrée dans laquelle le lien souple (162) n'est pas serré entre les deux mâchoires (170a-b),
- un premier système d'actionnement (172) qui actionne les mâchoires (170a-b) pour les faire passer alternativement de la position serrée à la position desserrée,
- un deuxième système d'actionnement (174) auquel est fixé le système de serrage (168) et qui est arrangé pour déplacer le système de serrage (168) entre les deux roues (154, 158), et
- une unité de contrôle qui commande le premier système d'actionnement (172) et le deuxième système d'actionnement (174).

2. Installation d'élevage (100) selon la revendication 1, **caractérisée en ce que** le deuxième système d'actionnement (174) comprend un vérin d'actionnement dont le cylindre ou la tige est fixé au poteau central (102a) et dont la tige ou le cylindre est fixé au système de serrage (168).

3. Installation d'élevage (100) selon la revendication 1, **caractérisée en ce que** le deuxième système d'actionnement (174) comprend deux vérins d'actionnement (176a-b) montés dans le prolongement l'un de l'autre avec une tige commune (178), où le cylindre du premier vérin d'actionnement (176a) est fixé au système de serrage (168) et où le cylindre du deuxième vérin d'actionnement (176b) est fixé au poteau (102a).

4. Installation d'élevage (100) selon l'une des revendications 1 à 3, **caractérisée en ce que** le système (150) comporte au moins un rail de guidage (180), **en ce que** le ou chaque rail de guidage (180) est fixé au poteau (102a) et **en ce que** le système de serrage (168) est monté coulissant le long du ou de chaque rail de guidage (180).

5. Installation d'élevage (100) selon la revendication 4, **caractérisée en ce que** le système de serrage (168) comporte une première mâchoire (170a) fixe et une deuxième mâchoire (170b) mobile horizontalement par rapport à la première mâchoire (170a), et **en ce que** la première mâchoire (170a) est guidée le long du ou de chaque rail de guidage (180).

6. Installation d'élevage (100) selon la revendication 5, **caractérisée en ce que** le lien souple (162) comporte des alvéoles (184), **en ce que** la deuxième mâchoire (170b) comporte des dents (186) et **en ce que** chaque dent (186) s'insère dans une alvéole (184) en position serrée.

7. Installation d'élevage (100) selon l'une des revendications 1 à 6, **caractérisée en ce qu'**elle comporte un système de verrouillage (190) commandé par l'unité de contrôle et **en ce que** le système de verrouillage (190) prend alternativement une position verrouillée dans laquelle le système de verrouillage (190) bloque la lice (104a-b) dans une position de blocage et une position déverrouillée dans laquelle le système de verrouillage (190) ne bloque pas la lice (104a-b).

8. Installation d'élevage (100) selon la revendication 7, **caractérisée en ce que** le système de verrouillage (190) comporte un support (191), un pêne (192) solidaire de la lice (104a-b), une gâche (194) comportant une butée fixe (194a) solidaire du support (191) et un loquet (194b) monté mobile en rotation sur le support (191), et un vérin de déverrouillage (196) commandé par l'unité de contrôle dont le cylindre est solidaire du poteau central (102a) et dont la tige est solidaire du support (191), et **en ce que** sous l'action du vérin de déverrouillage (196), le support (191) est mobile entre une première position correspondant à la position verrouillée dans laquelle le pêne (192) est dans la gâche (194) et une deuxième position correspondant à la position déverrouillée dans laquelle le pêne (192) n'est pas dans la gâche (194).

## Patentansprüche

1. Aufzuchtanlage (100), die Folgendes aufweist:
- zwei Pfosten (102a-c),
- einen Riegel (104a-b), der zwischen den zwei Pfosten (102a-c) um eine horizontale Drehachse (R) zwischen aufeinanderfolgend einer ersten Blockageposition, in der sich der Riegel (104a-b) vertikal erstreckt, einer Freigabeposition, in der sich der Riegel (104a-b) horizontal erstreckt, und einer zweiten Blockageposition, in der sich der Riegel (104a-b) vertikal erstreckt, drehbar gelagert ist, wobei der Riegel (104a-b) für jeden Pfosten (102a-c) eine Stange (106) umfasst, die um die Drehachse (R) auf dem Pfosten (102a-c) drehbeweglich gelagert ist,
- ein Antriebs- und Blockiersystem (150), das auf einem der Pfosten (102a) angeordnet ist, um den Riegel (104a-b) um die Drehachse (R) drehend anzutreiben, wobei das System (150) Folgendes aufweist
- ein erstes Rad (154), das koaxial an der Stange (106) befestigt ist, die dem Pfosten (102a) entspricht,
- ein zweites Rad (158), das frei drehbar an dem Pfosten (102a) gelagert ist und dessen Drehachse parallel zur Drehachse (R) des Riegels (104a-b) verläuft,
- eine weiche Verbindung (162), die eine Schleife zwischen den zwei Rädern (154, 158) bildet, wobei die Aufzuchtanlage (100) **dadurch gekennzeichnet ist, dass** sie ferner Folgendes aufweist
- ein Klemmsystem (168) mit zwei Backen (170a-b) die zwischen einer Klemmposition, in der die weiche Verbindung (162) zwischen den zwei Backen (170a-b) geklemmt ist, und einer gelösten Position, in der die weiche Verbindung (162) nicht zwischen den zwei Backen (170a-b) geklemmt ist, horizontal im Verhältnis zueinander beweglich sind,
- ein erstes Betätigungssystem (172), das die Backen (170a-b) betätigt, um sie abwechselnd aus der geklemmten Position in die gelöste Position wechseln zu lassen,
- ein zweites Betätigungssystem (174), an dem das Klemmsystem (168) befestigt ist, und das angeordnet ist, das Klemmsystem (168) zwischen den zwei Rädern (154, 158) zu bewegen, und
- eine Steuereinheit, die das erste Betätigungssystem (172) und das zweite Betätigungssystem (174) ansteuert.

2. Aufzuchtanlage (100) nach Anspruch 1, **dadurch gekennzeichnet, dass** das zweite Betätigungssystem (174) einen Betätigungszylinder umfasst, dessen Zylinder oder Kolbenstange am Mittelpfosten (102a) befestigt ist und dessen Kolbenstange oder Zylinder am Klemmsystem (168) befestigt ist.

3. Aufzuchtanlage (100) nach Anspruch 1, **dadurch gekennzeichnet, dass** das zweite Betätigungssystem (174) zwei Betätigungszylinder (176a-b) umfasst, die in Verlängerung zueinander mit einer gemeinsamen Kolbenstange (178) angebracht sind, wobei der Zylinder des ersten Betätigungszylinders (176b) am Klemmsystem (168) befestigt ist und wobei der Zylinder des zweiten Betätigungszylinders (176b) am Pfosten (102a) befestigt ist.

4. Aufzuchtanlage (100) nach einem der Ansprüche 1 bis 3, **dadurch gekennzeichnet, dass** das System (150) wenigstens eine Führungsschiene (180) aufweist, dadurch, dass die oder jede Führungsschiene (180) am Pfosten (102a) befestigt ist, und dadurch, dass das Klemmsystem (168) entlang der oder jeder Führungsschiene (180) gleitend gelagert ist.

5. Aufzuchtanlage (100) nach Anspruch 4, **dadurch gekennzeichnet, dass** das Klemmsystem (168) eine erste, feste Backe (170a) und eine zweite Backe (170b), die im Verhältnis zur ersten Backe (170a) horizontal beweglich ist, aufweist, und dadurch, dass die erste Backe (170a) entlang der oder jeder Führungsschiene (180) geführt wird.

6. Aufzuchtanlage (100) nach Anspruch 5, **dadurch gekennzeichnet, dass** die weiche Verbindung (162) Hohlkammern (184) aufweist, und dadurch, dass die zweite Backe (170b) Zähne (186) aufweist, und dadurch, dass sich jeder Zahn (186) in der Klemmposition in eine Hohlkammer (184) einfügt.

7. Aufzuchtanlage (100) nach einem der Ansprüche 1 bis 6, **dadurch gekennzeichnet, dass** sie ein Verriegelungssystem (190) aufweist, das von der Steuereinheit angesteuert wird, und dadurch, dass das Verriegelungssystem (190) abwechselnd eine verriegelte Position, in der das Verriegelungssystem (190) den Riegel (104a-b) in einer Blockageposition blockiert, und eine entriegelte Position, in der das Verriegelungssystem (190) den Riegel (104a-b) nicht blockiert, einnimmt.

8. Aufzuchtanlage (100) nach Anspruch 7, **dadurch gekennzeichnet, dass** das Verriegelungssystem (190) einen Träger (191), einen Bolzen (192), der fest mit dem Riegel (104a-b) verbunden ist, ein Schließstück (194) mit einem festen Anschlag (194a), das fest mit dem Träger (191) verbunden ist, und eine Klinke (194b), die drehbeweglich auf dem Träger (191) gelagert ist, und einen Entriegelungszylinder (196), der von der Steuereinheit angesteuert wird, dessen Zylinder fest mit dem Mittelpfosten (102a) verbunden ist und dessen Kolbenstange fest mit dem Träger (191) verbunden ist, aufweist, und dadurch, dass unter der Einwirkung des Entriegelungszylinders (196) der Träger (191) zwischen einer ersten Position, die der verriegelten Position entspricht, in der sich der Bolzen (192) in dem Schließstück (194) befindet, und einer zweiten Position, die der entriegelten Position entspricht, in der sich der Bolzen (192) nicht in dem Schließstück (194) befindet, beweglich ist.

## Claims

1. Rearing facility (100) comprising:
- two posts (102a-c),
- a rail (104a-b) rotatably mounted between the two posts (102a-c) about a horizontal axis of rotation (R), successively between a first locking position in which the rail (104a-b) extends vertically, a release position in which the rail (104a-b) extends horizontally, and a second locking position in which the rail (104a-b) extends vertically, wherein the rail (104a-b) has, for each post (102a-c), a bar (106) rotatably mounted around the axis of rotation (R) on the post (102a-c),
- a drive and locking system (150) arranged on one of the posts (102a) for driving the rail (104a-b) in rotation about the axis of rotation (R), wherein the system (150) comprises:
- a first wheel (154) coaxially attached to the bar (106) corresponding to said post (102a),
- a second wheel (158) mounted freely in rotation on said post (102a) and whose axis of rotation is parallel to the axis of rotation (R) of the rail (104a-b),
- a flexible link (162) forming a loop between the two wheels (154, 158),
**characterised in that** the rearing facility (100) further comprises:
- a clamping system (168) with two jaws (170a-b) movable horizontally relative to each other between a clamped position in which the flexible link (162) is clamped between the two jaws (170a-b), and an released position in which the flexible link (162) is not clamped between the two jaws (170a-b),
- a first actuating system (172) which actuates the jaws (170a-b) to move them alternately from the clamped position to the released position,
- a second actuating system (174) to which the clamping system (168) is attached and which is arranged to move the clamping system (168) between the two wheels (154, 158), and
- a control unit which controls the first actuating system (172) and the second actuating system (174).

2. Rearing facility (100) according to claim 1, **characterized in that** the second actuation system (174) comprises an actuation cylinder whose cylinder portion or rod is attached to the central post (102a) and whose rod or cylinder portion is attached to the clamping system (168).

3. Rearing facility (100) according to claim 1, **characterized in that** the second actuation system (174) comprises two actuation cylinders (176a-b) mounted in the extension of each other with a common rod (178), where the cylinder portion of the first actuation cylinder (176a) is attached to the clamping system (168), and where the cylinder portion of the second actuation cylinder (176b) is attached to the post (102a).

4. Rearing facility (100) according to one of claims 1 to 3, **characterized in that** the system (150) comprises at least one guiding rail (180), **in that** the or each guiding rail (180) is attached to the post (102a), and **in that** the clamping system (168) is slidably mounted along the or each guiding rail (180).

5. Rearing facility (100) according to claim 4, **characterized in that** the clamping system (168) comprises a first fixed jaw (170a) and a second jaw (170b) movable horizontally relative to the first jaw (170a), and **in that** the first jaw (170a) is guided along the or each guiding rail (180).

6. Rearing facility (100) according to claim 5, **characterized in that** the flexible link (162) comprises cells (184), **in that** the second jaw (170b) comprises teeth (186), and **in that** each tooth (186) fits into a cell (184) in a clamped position.

7. Rearing facility (100) according to one of claims 1 to 6, **characterized in that** it comprises a locking system (190) controlled by the control unit, and **in that** the locking system (190) alternately takes a locked position in which the locking system (190) locks the rail (104a-b) in a locking position, and an unlocked position in which the locking system (190) does not lock the rail (104a-b).

8. Rearing facility (100) according to claim 7, **characterized in that** the locking system (190) comprises a bracket (191), a bolt (192) integral with the rail (104a-b), a strike plate (194) comprising a fixed stop (194a) integral with the bracket (191), and a latch (194b) rotatably mounted on the bracket (191), and an unlocking cylinder (196) controlled by the control unit, the cylinder portion of which is integral with the central post (102a) and the rod of which is integral with the bracket (191), and **in that** under the action of the unlocking cylinder (196), the bracket (191) is movable between a first position corresponding to the locked position in which the bolt (192) is in the strike plate (194), and a second position corresponding to the unlocked position in which the bolt (192) is not in the strike plate (194).
